**Europäisches Patentamt**

(19) **European Patent Office**

**Office européen des brevets**

(11) Veröffentlichungsnummer: **0 029 017**
**B1**

(12) # EUROPÄISCHE PATENTSCHRIFT

(45) Veröffentlichungstag der Patentschrift:
**21.12.83**

(51) Int. Cl.³: **H 01 M 10/14,** H 01 M 2/18

(21) Anmeldenummer: **80890102.9**

(22) Anmeldetag: **08.09.80**

(54) Vorrichtung zum Eintaschen und Abstapeln von positiven oder negativen Platten für Akkumulatoren.

(30) Priorität: **07.11.79 AT 7162/79**

(43) Veröffentlichungstag der Anmeldung:
**20.05.81 Patentblatt 81/20**

(45) Bekanntmachung des Hinweises auf die Patenterteilung:
**21.12.83 Patentblatt 83/51**

(84) Benannte Vertragsstaaten:
**DE FR GB IT**

(56) Entgegenhaltungen:
**DE - A - 1 804 683**
**GB - A - 1 415 958**
**GB - A - 2 001 797**
**JP - A - 54 003 233**
**US - A - 4 026 000**
**US - A - 4 026 421**

(73) Patentinhaber: **ELBAK Batteriewerke Gesellschaft m.b.H., Puntigamer Strasse 127, A-8055 Graz-Puntigam Steiermark (AT)**

(72) Erfinder: **Novotny, Hans Jürgen, Grazerstrasse 34, A-8055 Graz (Steiermark) (AT)**
Erfinder: **Frieser, Edwin, Papiermühlg. 28, A-8055 Graz (Steiermark) (AT)**

(74) Vertreter: **Beer, Otto, Dipl.-Ing. et al, Lindengasse 8, A-1071 Wien (AT)**

EP 0 029 017 B1

## Vorrichtung zum Eintaschen und Abstapeln von positiven oder negativen Platten für Akkumulatoren

Die Erfindung betrifft eine Vorrichtung zum Eintaschen von positiven oder negativen Platten für Akkumulatoren und zum Abstapeln von eingetaschten und nicht eingetaschten Platten mit einem Magazin für die Platten, die in ein von mindestens einer Spule abgezogenes Separatorenband einzutaschen sind, mit einer Schweißeinrichtung zum Verschweißen der Seitenränder der um die Platten gefalteten Separatorenbandabschnitte, mit Magazinen für weitere Platten und mit einer Abstapelvorrichtung.

Eine derartige Vorrichtung, mit der ohne händisches Zutun zum Einbau in Akkumulatoren vorbereitete Stapel aus eingetaschten und nicht eingetaschten Platten für Akkumulatoren sowie den notwendigen Endplatten zusammengestellt werden können, ist aus der JP-A-543 233 und der GB-A-2 001 797 bekannt. Nachteilig bei der bekannten Vorrichtung ist der Umstand, daß das Separatorenband an der Stelle der Vorrichtung, in der es um eine Akkumulatorenplatte herumgefaltet werden soll, nicht geführt ist, so daß die von Schneidwalzen abgelängten Bandabschnitte auch vorgefalzt werden müssen und im übrigen das Separatorenband nicht kontinuierlich herangefördert werden kann. Die bekannte Vorrichtung arbeitet auch beim Weitertransport und dem Abstapeln der Platten nicht kontinuierlich, weil die um die Platten herumgefalteten Separatorenbandabschnitte auf der Fördereinrichtung verbleibend zu Taschen verschweißt werden und eine einen nur diskontinuierlichen Betrieb der Fördereinrichtung gestattende Abstapeleinrichtung vorgesehen ist.

Der Erfindung liegt die Aufgabe zugrunde, eine Vorrichtung der eingangs genannten Gattung anzugeben, welche die geschilderten Nachteile nicht aufweist und die einen kontinuierlichen Antrieb der Förderorgane für das Separatorenband und der Fördereinrichtung gestattet.

Erfindungsgemäß wird dies dadurch erreicht, daß mindestens ein lotrecht verlaufender, gerader Kanal, in den das von der Spule abgezogene Separatorenband eingeführt wird, vorgesehen ist, wobei dem Kanal ein quer zur Längserstreckung des Kanals hin- und hin verschiebbares Messer zum Ablängen des Separatorenbandes zugeordnet ist, daß im Kanal ein quer zu seiner Längserstreckung verlaufender Schlitz vorgesehen ist, durch den eine aus dem neben dem Kanal angeordneten Magazin entnommene Platte unter Falten und Herausschieben des abgelängten Separatorenbandstückes aus dem Kanal hindurchschiebbar ist, daß die Schweißeinrichtung zum Verschweißen der Seitenränder des so um die Platte herumgefalteten Separatorenbandabschnittes und eine Fördereinrichtung, auf der dem Magazin gegenüberliegenden Seite des Kanals angeordnet sind, daß unterhalb der Schweißeinrichtung ein hebbarer Preßstempel vorgesehen ist, mit dem die in Separatorenbandabschnitte eingetaschten Platten von der Fördereinrichtung abgehoben und zur Ausführung der Schweißung von unten gegen die Schweißeinrichtung gedrückt werden, daß der Fördereinrichtung Magazine für weitere Platten zugeordnet sind und daß am abgabeseitigen Ende der Fördereinrichtung ein Sammelschacht vorgesehen ist, in dem abwechselnd eingetaschte und nicht eingetaschte Platten ablegbar sind.

Durch das Merkmal, daß der Separatorenbandabschnitt von der in ihr einzutaschenden Platte aus dem Kanal herausgeschoben und dabei gleichzeitig um die Platte gefaltet wird, ist es möglich, einerseits mit nicht vorgefaltetem Separatorenband zu arbeiten und andererseits der Schweißeinrichtung selbsttätig Platten, die in Separatorenbandabschnitte eingetascht sind, zur Ausführung des Schweißvorganges zuzuführen. Bei der Ausführung des Schweißvorganges kann die Fördereinrichtung weiterlaufen, da die Platte, um die der Separatorenbandabschnitt herumgefaltet ist, von der Fördereinrichtung abgehoben ist. Dadurch, daß der im Anschluß an den Kanal beginnenden Fördereinrichtung für die eingetaschten Platten Magazine für die zur eingetaschten Platte entgegengesetzte Plattenart (positiv bzw. negativ) und für Endplatten zugeordnet sind, lassen sich die gewünschten Folgen von Platten auch bei Verwendung einer einzigen Fördereinrichtung herstellen. Es versteht sich, daß sämtliche im Rahmen der erfindungsgemäßen Vorrichtung verwendeten Plattenstapel in Magazinen, die zur selbsttätigen Aufgabe einzelner Platten aus dem Stapel ausgebildet sind, aufgenommen sein können. Dadurch, daß an Stelle der bekannten, mit Schneiden ausgerüsteten Walzenpaare bei der Erfindung ein hin- und herverschiebbares Messer vorgesehen ist, kann das Separatorenband in der gewünschten Länge ohne Umbau der Schneideinrichtung (Austausch der Schneidwalzen) abgelängt werden.

Mit Vorteil ist im Rahmen der Erfindung vorgesehen, daß das dem Kanal zugeordnete Messer ein doppelschneidiges Messer ist. Dadurch führt das Messer bei jedem Hub Schneidarbeit aus.

Weiters hat es sich im Rahmen der Erfindung bewährt, wenn zwischen dem Kanal und der Schweißeinrichtung Quetschrollen zum Sichern des um die Platte gefalteten Zustandes des Separatorenbandabschnittes vorgesehen sind.

Ein weiteres Merkmal der Erfindung besteht darin, daß der Sammelschacht einen heb- und senkbaren Boden aufweist, mit welchem die im Schacht gebildeten Stapel positiver und negativer Platten sowie von Endplatten auf ein weiteres Förderband absetzbar sind. Bei dieser Ausführungsform können die zur weiteren Verwendung bereiten Platten in der gewünschten Reihenfolge gestapelt nacheinander aus der erfindungsgemäßen Vorrichtung der weiteren Verwendung zugeführt werden.

Im Rahmen der Erfindung hat es sich weiters bewährt, wenn im Sammelschacht in dessen Innenraum vor- und aus diesem zurückschiebbare Stifte vorgesehen sind, auf welchen die von der Fördereinrichtung kommenden Platten vorübergehend aufliegen. Hierbei kann vorgesehen sein, daß die vor- und zurückschiebbaren Stifte im Sammelschacht in einer vom abgabeseitigen Ende der Fördereinrichtung weg abfallenden Ebene angeordnet sind. Diese Merkmale gestatten das kontinuierliche Abstapeln auch dann, wenn gerade ein Stapel aus dem Sammelschacht entnommen wird.

Ein weiteres Merkmal der Erfindung liegt darin, daß im Sammelschacht zurückziehbare Krallen vorgesehen sind, die in einer horizontalen Ebene angeordnet sind und auf welchen die Platten bei abgesenktem Schachtboden vorübergehend aufliegen.

Bei einer praktischen Ausführungsform kann vorgesehen sein, daß, in Arbeitsrichtung der Vorrichtung gesehen, vor dem Kanal ein Magazin für positive Platten, nach der Schweißeinrichtung ein Magazin für negative Platten und im Anschluß daran ein Magazin für negative Endplatten vorgesehen sind.

Weitere Einzelheiten und Vorteile der Erfindung ergeben sich aus nachstehender Beschreibung der in den Zeichnungen schematisch wiedergegebenen Ausführungsbeispiele. Es zeigt

Figur 1 eine Vorrichtung in Seitenansicht,

Figur 2 die Vorrichtung aus Figur 1 in Draufsicht und

Figur 3 eine Ausführungsform mit zwei Kanälen für das Separatorenband in Draufsicht.

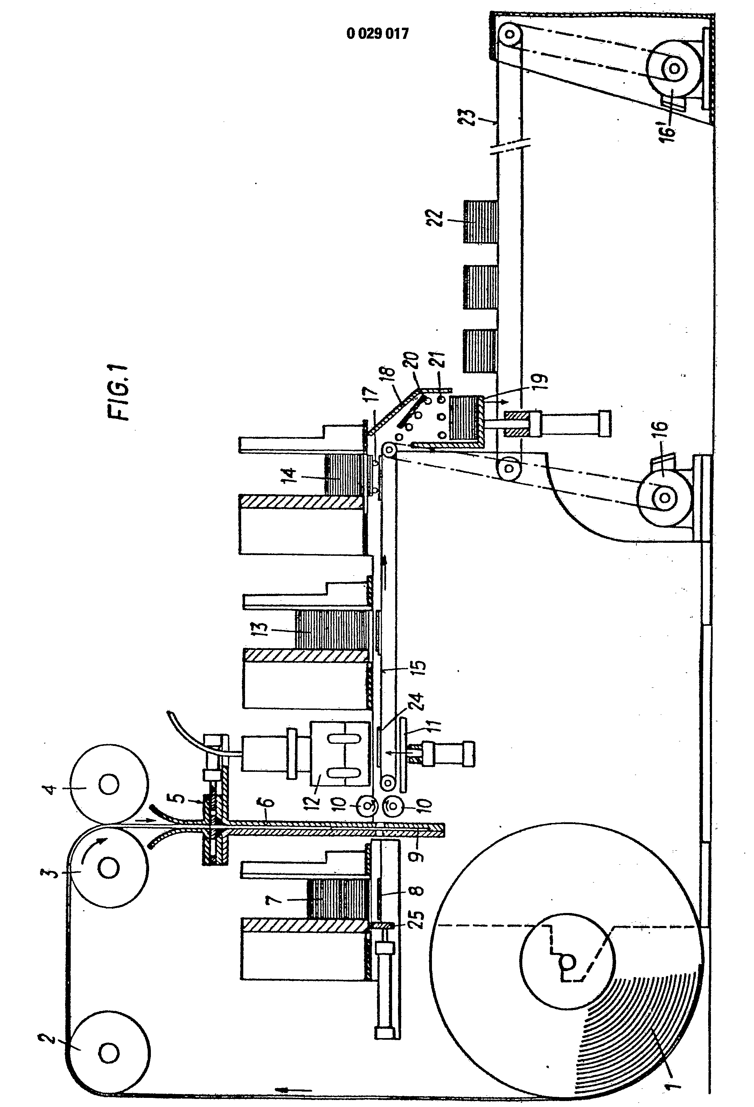

Bei der in Fig. 1 gezeigten Vorrichtung ist an einem Maschinengestell eine Halterung für eine Spule 1 vorgesehen, von der Separatorenband über eine Umlenkrolle 2 von einer Antriebsrolle 3, der eine Anpreßrolle 4 zugeordnet ist, in einen Kanal 6 hineingefördert wird. Dem oberen Bereich des Kanals 6 ist eine Schneidvorrichtung 5 zugeordnet, die ein hin- und herbewegbares Messer zum Ablängen von Separatorenband aufweist.

In Fig. 1 links neben dem Kanal 6 ist ein Magazin 7 mit positiven Akkumulatorenplatten vorgesehen, das in einem Magazin zur selbsttätigen Abgabe einzelner Platten aus dem Magazin aufgenommen ist. Am unteren Ende des Magazins ist eine Schubvorrichtung 25 vorgesehen, mit der die aus dem Magazin entnommenen, vereinzelten positiven Platten 8 durch einen im unteren Abschnitt des unten geschlossenen Kanals 6 quer zur Längserstreckung des Kanals 6 verlaufenden Schlitz hindurchgeschoben werden können. Hierbei wird ein im unteren Ende des Kanals 6 befindliches, abgeschnittenes Stück Separatorenband 9 gegebenenfalls nach Erwärmen des Biegebereiches um die Platte 8 herumgefaltet. Auf der dem Magazin 7 für die positiven Platten gegenüberliegenden Seite des Kanals 6 ist ein Paar Quetschrollen 10 vorgesehen, von welchen die durch den Schlitz im Kanal 6 hindurchgeschobene Platte 8 einer Schweißeinrichtung 12 zugeführt wird.

Die Schweißeinrichtung 12 ist über einer Fördereinrichtung 15 angeordnet. Unterhalb der Fördereinrichtung 15 ist ein Preßstempel vorgesehen, mit dem die in Separatorenband eingehüllten Platten 8 gegen die Schweißeinrichtung 12 drückbar sind.

Im Anschluß an die Schweißeinrichtung 12 sind über der Fördereinrichtung 15 ein Magazin 13 mit einem Stapel negativer Mittelplatten sowie ein weiteres Magazin 14 mit einem Stapel negativer Endplatten vorgesehen. Beide Magazine sind zur Abgabe einzelner Platten aus dem Magazin eingerichtet.

Am abgabeseitigen Ende der Fördereinrichtung 15 ist ein Sammelschacht 18 vorgesehen, in dem vor- und zurückschiebbare Stifte 20 in einer vom abgabeseitigen Ende des Förderbandes weg abfallenden Ebene angeordnet sind. Der Boden 19 des Sammelschachtes 18 ist heb- und senkbar ausgebildet und arbeitet in seiner unteren Endstellung mit einem weiteren Förderband 23 für den Abtransport der Plattenstapel zusammen. Die Fördereinrichtungen 15 und 23 werden von Antrieben 16 bzw. 16' in Bewegung gesetzt.

Im Sammelschacht 18 sind weiter zurückziehbare Krallen 21 vorgesehen, auf welchen die von den Stiften 20 freigegebenen Platten bei abgesenktem Boden 19 des Sammelschachtes 18 vorübergehend aufliegen.

Die zuvor beschriebene Vorrichtung arbeitet wie folgt:

Das Separatorenband wird durch die Antriebsrolle 3 in den Kanal 6 geführt. Die Schneidvorrichtung 5 schneidet den Separator in der gewünschten Länge ab. Das doppelschneidige Messer der Schneidevorrichtung ermöglicht einen kontinuierlichen Antrieb des Separatorenbandes, da es den Separator bei der Hin- und Herbewegung abschneidet. Das abgeschnittene Stück Separatorenband 9 fällt durch sein Eigengewicht im Kanal 6 bis zu seinem unteren Ende.

Eine aus dem Plattenmagazin 7 vereinzelte Platte 8 wird durch eine Schubvorrichtung 25 durch den Schlitz im Kanal 6 hindurchgestoßen. Das Stück Separatorenband 9 wird gefaltet und durch die angetriebenen Rollen 10 auf eine als Transportkette ausgebildete Fördereinrichtung 15 geschoben. Die vom Separator eingetaschte Platte 24 wird vom Preßstempel 11 von der Fördereinrichtung 15 abgehoben und gegen die Schweißeinrichtung 12 gedrückt. Der Separator wird auf beiden Seiten verschlossen. Nach dem Schweißvorgang wird die Platte 24 wieder auf die Fördereinrichtung 15 abgesetzt und unter das Magazin 13 gefördert. Eine negative Mittelplatte wird auf die eingetaschte Platte 24 gelegt und beide zusammen werden in den Sammelschacht 18 geworfen, wobei sie zunächst auf den Stiften 20 aufliegen. Die Stifte 20 gehen zurück und die Platten werden im Schacht 18 gesammelt, wobei der Boden 19 entsprechend der neu zugekommenen Plattenstärken abgesenkt wird. Die Oberkante des Stapels im Sammelschacht 18 bleibt somit auf gleicher Höhe.

Bei Erreichen der vorgewählten Plattenanzahl im Sammelschacht 18 senkt sich der Boden 19 des Sammelschachtes 18 ab und setzt den fertig gelegten Stapel 22 auf das Förderband 23. Dieses zieht den Stapel 22 aus dem Sammelschacht 18 heraus und der Boden 19 geht wieder in seine Ausgangsposition zurück. Während dieser Zeit sind die Rückziehkrallen 21 vorne und sammeln die in der Zwischenzeit in den Schacht 18 gefallenen Platten.

Beim Hochgehen des Bodens 19 gehen die Rückziehkrallen 21 wieder zurück und lassen die inzwischen gesammelten Platten wieder auf den Boden 19 des Sammelschachtes 18 fallen.

Da als erste Platte in jedem Stapel 22 eine negative Platte liegen muß, wird zur gegebenen Zeit aus dem Magazin 14 eine Platte auf den Plattentisch 17 fallen und von diesem unmittelbar vor der eingetaschten Platte 4 auf die Fördereinrichtung abgeworfen. Auf den Stiften 20 liegen am Stapel eine negative Platte vom Plattenmagazin 14, eine eingetaschte positive Platte 24 und eine Platte vom Plattenmagazin 13.

In sinnvollen Abänderungen können auch in der erfindungsgemäßen Vorrichtung in gleicher Weise wie die hier gezeigte Eintaschung der positiven Platten auch die negativen Platten eingetascht werden.

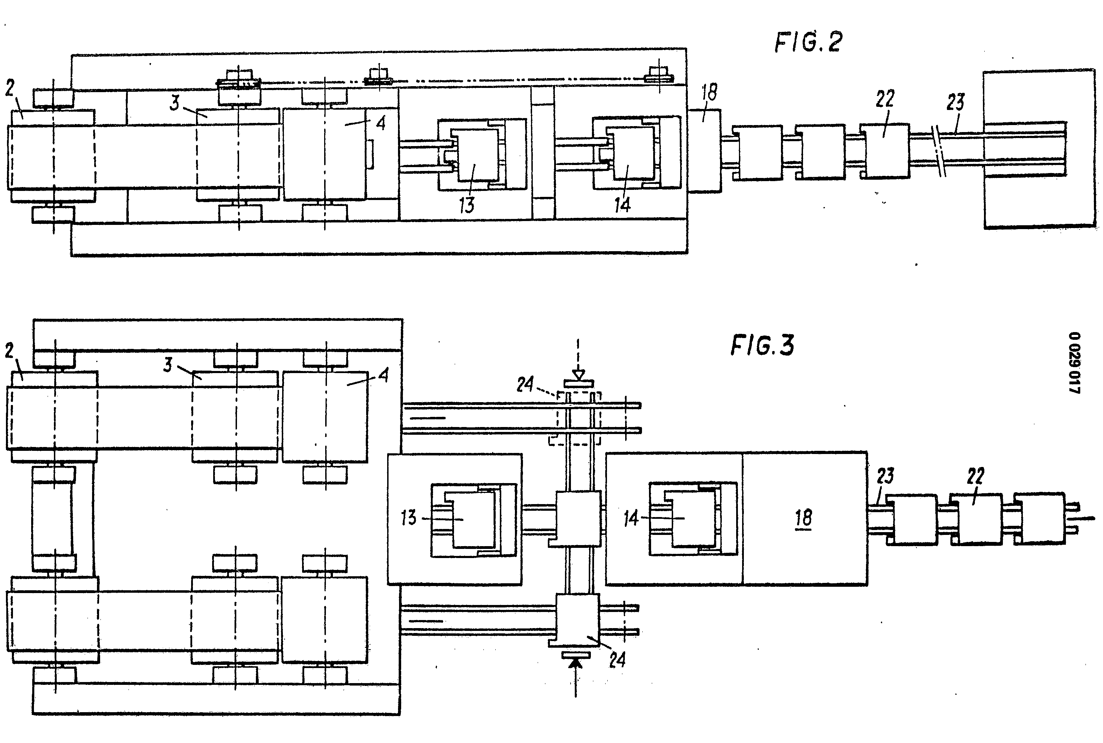

Um eine größere Arbeitsgeschwindigkeit zu erreichen, ist auch eine Anordnung, wie in Fig. 3 gezeigt, möglich. Hier arbeiten zwei Eintasch- und Schweißmaschinen abwechselnd auf ein Zentralband, das mit je einem negativen Mittelplatten- und Endplattenmagazin bestückt ist.

**Patentansprüche**

1. Vorrichtung zum Eintaschen von positiven oder negativen Platten für Akkumulatoren und zum Abstapeln von eingetaschten und nicht eingetaschten Platten mit einem Magazin für die Platten, die in ein von mindestens einer Spule (1) abgezogenes Separatorenband einzutaschen sind, mit einer Schweißeinrichtung (12) zum Verschweißen der Seitenränder der um die Platten gefalteten Separatorenbandabschnitte (9), mit Magazinen (13, 14) für weitere Platten und mit einer Abstapelvorrichtung (18), dadurch gekennzeichnet, daß mindestens ein lotrecht verlaufender, gerader Kanal (6), in den das von der Spule (1) abgezogene Separatorenband eingeführt wird, vorgesehen ist, wobei dem Kanal (6) ein quer zur Längserstreckung des Kanals (6) hin- und herverschiebbares Messer (5) zum Ablängen des Separatorenbandes zugeordnet ist, daß im Kanal (6) ein quer zu seiner Längserstreckung verlaufender Schlitz vorgesehen ist, durch den eine aus dem neben dem Kanal (6) angeordneten Magazin (7) entnommene Platte (8) unter Falten und Herausschieben des abgelängten Separatorenbandstückes (9) aus dem Kanal (6) hindurchschiebbar ist, daß die Schweißeinrichtung (12) zum Verschweißen der Seitenränder des so um die Platte (8) herumgefalteten Separatorenbandabschnittes (9) und eine Fördereinrichtung (15), auf der dem Magazin (7) gegenüberliegenden Seite des Kanals (6) angeordnet sind, daß unterhalb der Schweißeinrichtung (12) ein hebbarer Preßstempel (11) vorgesehen ist, mit dem die in die Separatorenbandabschnitte (9) eingetaschten Platten (24) von der Fördereinrichtung (15) abgehoben und zur Ausführung der Schweißung von unten gegen die Schweißeinrichtung (12) gedrückt werden, daß der Fördereinrichtung (15) Magazine (13, 14) für weitere Platten zugeordnet sind und daß am abgabeseitigen Ende der Fördereinrichtung (15) ein Sammelschacht (18) vorgesehen ist, in dem abwechselnd eingetaschte und nicht eingetaschte Platten ablegbar sind.

2. Vorrichtung nach Anspruch 1, dadurch gekennzeichnet, daß das dem Kanal (6) zugeordnete Messer (5) ein doppelschneidiges Messer ist.

3. Vorrichtung nach Anspruch 1 oder 2, dadurch gekennzeichnet, daß zwischen dem Kanal (6) und der Schweißeinrichtung (12) Quetschrollen (10) zum Sichern des um die Platte (24) gefalteten Zustandes des Separatorenbandabschnittes (9) vorgesehen sind.

4. Vorrichtung nach den Ansprüchen 1 bis 3, dadurch gekennzeichnet, daß der Sammelschacht (18) einen heb- und senkbaren Boden (19) aufweist, mit welchem die im Schacht (18) gebildeten Stapel (22) positiver und negativer Platten sowie von Endplatten auf ein weiteres Förderband (23) absetzbar sind.

5. Vorrichtung nach den Ansprüchen 1 bis 4, dadurch gekennzeichnet, daß im Sammelschacht (18) in dessen Innenraum vor- und aus diesem zurückschiebbare Stifte (20) vorgesehen sind, auf welchen die von der Fördereinrichtung (15) kommenden Platten vorübergehend aufliegen.

6. Vorrichtung nach Anspruch 5, dadurch gekennzeichnet, daß die vor- und zurückschiebbaren Stifte (20) im Sammelschacht (18) in einer vom abgabeseitigen Ende der Fördereinrichtung (15) weg abfallenden Ebene angeordnet sind.

7. Vorrichtung nach den Ansprüchen 4 bis 6, dadurch gekennzeichnet, daß im Sammelschacht (18) zurückziehbare Krallen (21) vorgesehen sind, die in einer horizontalen Ebene angeordnet sind und auf welchen die Platten bei abgesenktem Schachtboden (19) vorübergehend aufliegen.

8. Vorrichtung nach den Ansprüchen 1 bis 7, dadurch gekennzeichnet, daß, in Arbeitsrichtung der Vorrichtung gesehen, vor dem Kanal (6) ein Magazin (7) für positive Platten (8), nach der Schweißeinrichtung (12) ein Magazin (13) für negative Platten und im Anschluß daran ein Magazin (14) für negative Endplatten vorgesehen sind.

9. Vorrichtung nach den Ansprüchen 1 bis 8, dadurch gekennzeichnet, daß als Fördereinrichtung ein endloses Förderband (15) vorgesehen ist.

## Claims

1. Apparatus for the pocketing of positive or negative plates for batteries and for the stacking of pocketed and unpocketed plates, including a magazine for the plates which are to be pocketed in a separator strip unwound from at least one spool (1), a welding device (12) for welding together the side edges of the pieces (9) of separator strip folded about the plates, magazines (13, 14) for further plates and a stacking device (18) characterized in that at least one vertically extending straight channel (6) is provided into which the separator strip unwound from the spool (1) is introduced, whereby a knife (5) displaceable back and forth transverse to the longitudinal extension of the channel (6) is coordinated to the channel (6) for cutting off the separator strip, that a slot is provided in the channel (6) extending transversely of its longitudinal extension, through which a plate (8) dispensed from the magazine (7), arranged adjacent to the channel (6) may be pushed, thereby folding the cut piece (9) of separator strip and pushing it out of the channel (6), that the welding device (12) for welding the side edges of the piece (9) of separator strip thus folded about the plate (8) and a conveyor means (15) are arranged on the side of the channel (6) opposite the magazine (7), that a raisable press ram (11) is provided below the welding device (12) by means of which the plates (24) pocketed in the pieces (9) of separator strip are lifted from the conveyor means (15) and are pressed from below against the welding device (12) for performing the welding, that magazines (13, 14) for further plates are coordinated to the conveyor means (15) and that at the delivery end of the conveyor means (15) a collecting shaft (18) is provided into which are placeable alternately pocketed and unpocketed plates.

2. Apparatus according to claim 1, characterized in that the knife (5) coordinated to the channel (6) is a double-edged knife.

3. Apparatus according to claim 1 or 2, characterized in that squeezing rollers (10) are provided between the channel (6) and the welding device (12) to assure the condition of the piece (9) of separator strip folded about the plate (24).

4. Apparatus according to claims 1 to 3, characterized in that the collection shaft (18) has a raisable and lowerable bottom (19) by means of which the stacks (22) of positive and negative plates as well as of end plates built up in the collecting shaft (18) are transferrable onto a further conveyor belt (23).

5. Apparatus according to claims 1 to 4, characterized in that in the collecting shaft (18) pins (20) are provided that can be protracted and retracted with respect to its interior space, on which the plates coming from the conveyor means (15) rest temporarily.

6. Apparatus according to claim 5, characterized in that the pro- and retractable pins (20) in the collecting shaft (18) are arranged in a plane which slopes down from the delivery end of the conveyor means (15).

7. Apparatus according to claims 4 to 6, characterized in that in the collection shaft (18) retractable claws (21) are provided, which are arranged in a horizontal plane and on which the plates rest temporarily while the bottom surface (19) of the collecting shaft is lowered.

8. Apparatus according to claims 1 to 7, characterized in that as seen in the direction of operation of the apparatus, a magazine (7) for positive plates (8) is arranged upstream of the channel (6), a magazine (13) for negative plates is arranged downstream of the welding device (12), and, still further downstream, a magazine (14) for negative and plates are arranged.

9. Apparatus according to claims 1 to 8, characterized in that the conveyor means comprises an endless conveyor belt (15).

## Revendications

1. Dispositif pour l'enveloppement de plaques positives ou négatives d'accumulateurs et pour l'empilage de plaques enveloppées et non enveloppées, comprenant un magasin pour les plaques qui soivent être enveloppées dans une bande de séparateur déroulée d'au moins une bobine (1), ainsi qu'un dispositif (12) pour le soudage des bords latéraux des tronçons de bande de séparateur (9) pliés autour des plaques, des magasins (13, 14) pour d'autres plaques et un dispositif d'empilage (18), caractérisé en ce qu'au moins un canal vertical et droit (6) est prévu, dans lequel la bande de séparateur déroulée de la bobine (1) est introduite, dans ce canal (6) est disposé un dispositif de coupe (5) pouvant effectuer un va-et-vient perpendiculaire à la longueur du canal pour la mise à longueur de la bande de séparateur, le canal (6) présente une fente perpendiculaire à sa longueur par laquelle une plaque (8) prise du magasin (7) pacé à côté de canal (6) peut être poussée à travers ce canal (6), le tronçon de bande de séparateur (9) mis à longueur étant plié et expulsé, le dispositif de soudage (12) pour le soudage des bords latéraux du tronçon de bande de séparateur (9) ainsi plié autour de la plaque (8) et un transporteur (15) sont placés sur le côté du canal (6) opposé au magasin (7), en-dessous du dispositif de soudage (12) est prévu un poinçon élévateur (11) par lequel les plaques (24) enveloppées dans des tronçons de bande de séparateur (9) sont soulevées du transporteur (15) et pressées par le bas, pour l'exécution du soudage, contre le dispositif de soudage (12), le transporteur (15) comprend des magasins (13, 14) pour d'autres plaques et il est prévu, à l'extrémité d'évacuation du transporteur (15) une goulotte collectrice (18), dans laquelle peuvent être déposées alternativement des plaques enveloppées et non enveloppées.

2. Dispositif selon la revendication 1, caractérisé en ce que le dispositif de coupe (5) disposé dans le canal (6) est à double tranchant.

3. Dispositif selon l'une quelconque des revendications 1 et 2, caractérisé en ce qu'entre le canal (6) et le dispositif de soudage (12) sont prévus des rouleaux pinceurs (10) pour assurer le maintien à l'état plié autour de la plaque (24) du tronçon de bande de séparateur (9).

4. Dispositif selon l'une quelconque des revendications 1 à 3, caractérisé en ce que la goulotte collectrice (18) a un fond (19) pouvant être monté et abaissé, avec lequel la pile (22) de plaques positives et négatives ainsi que de plaques d'extrémités formée dans la goulotte (18) peut être déposée sur une autre bande transporteuse (23).

5. Dispositif selon l'une quelconque des revendications 1 à 4, caractérisé en ce que dans la goulotte collectrice (18) il est prévu des doigts (20) qui peuvent avancer à l'intérieur de celle-ci et en être retirés, les plaques provenant du transporteur (15) reposant provisoirement sur ces doigts.

6. Dispositif selon la revendication 5, caractérisé en ce que les doigts (20) qui sont dans la goulotte collectrice (18) et qui peuvent être avancés et retirés sont disposés dans un plan incliné s'éloignant de l'extrémité — disposée du côté de l'évacuation — du transporteur (15).

7. Dispositif selon l'une quelconque des revendications 4 à 6, caractérisé en ce qu'il est prévu, dans la goulotte collectrice (18) des griffes rétractables (21), qui sont disposées horizontalement et sur lesquelles les plaques reposent provisoirement quand le fond (19) de la goulotte est abaissé.

8. Dispositif selon l'une quelconque des revendications 1 à 7, caractérisé en ce que, dans le sens du travail du dispositif, il est prévu, avant le canal (6), un magasin (7) pour des plaques positives (8), après le dispositif de soudage (12) un magasin (13) pour des plaques négatives et, à la suite, un magasin (14) pour des plaques négatives d'extrémité.

9. Dispositif selon l'une quelconque des revendications 1 à 8, caractérisé en ce que, comme transporteur, il est prévu une bande transporteuse sans fin (15).

FIG.1

FIG.2

FIG.3

0 029 017